# EUROPEAN PATENT APPLICATION

(11) **EP 4 258 414 A1**
(43) Date of publication of application: **11.10.2023**
(21) Application number: 22883791.0
(22) Date of filing: 20.09.2022
(51) Int. Cl.: H01M 10/52, H01M 4/13, H01M 10/058, H01M 10/052

(54) **ELECTRODE, ELECTRODE ASSEMBLY, AND SECONDARY BATTERY COMPRISING SAME**

(30) Priority: 18.10.2021 KR 20210138184
(71) Applicant: LG Energy Solution, Ltd., Seoul 07335 (KR)
(72) Inventor: HWANG, Gyu Ok, Daejeon 34122 (KR)
(74) Representative: Plasseraud IP
(86) International application number: PCT/KR2022/014021
(87) International publication number: WO 2023/068567

(57) **Abstract**

The present technology relates to an electrode for a secondary battery and an electrode assembly including the same, and the electrode includes mixture layers and gas adsorption layers formed on at least one surface of an electrode current collector, wherein, since the mixture layers have a pattern structure and the gas adsorption layers are provided in regions where the mixture layers are not patterned, there is an advantage in that a secondary battery including the above electrode assembly has excellent performance and stability due to an excellent effect of removing a gas generated during initial charging/discharging of the secondary battery.

## Description

### [Technical Field]

The present invention relates to an electrode for a secondary battery including a means capable of adsorbing a gas generated during charging/discharging.

This application claims the benefit of priority based on Korean Patent Application No. 10-2021-0138184, filed on October 18, 2021, and the entire contents of the Korean patent application are incorporated herein by reference.

### [Background Art]

Recently, as technology development and demands for mobile devices increase, and electric vehicles (EVs) become popular, demands for batteries as an energy source are rapidly increasing, and accordingly, many studies for batteries which can meet various demands have been performed.

Typically, in an aspect of a battery shape, demands for a prismatic secondary battery and a pouch-type secondary battery applicable to products such as a mobile phone or the like due to thin thicknesses are high, and in an aspect of a material, demands for a lithium secondary battery such as a lithium ion battery, a lithium ion polymer battery, or the like having advantages such as high energy density, discharge voltage, output stability, or the like are high.

However, despite these advantages, a lithium secondary battery has a disadvantage in stability. Specifically, an electrolyte reacts and generates a gas during primary charging immediately after an electrolyte is injected into a battery assembly, aging, and charging/discharging, and the generated gas is collected in the battery and causes problems such as capacity deterioration and lithium precipitation. Further, after final sealing, in the case of an abnormal operation such as an inner short circuit, overcharge, high temperature exposure, and the like, a significant amount of gas can be generated to elevate an inner pressure while the electrolyte is decomposed. In this case, the generated high-pressure gas can cause deformation of a battery case, can shorten a lifespan of the battery, and more seriously, can cause ignition or explosion of the battery.

To this end, conventionally, when a secondary battery is manufactured, a deaeration process of discharging a gas generated in the secondary battery using a vacuum is used, but during the deaeration process, there was a problem in that the electrolyte also leaks and thus a defect rate of the lithium battery increases, uniformity of a lifespan of the secondary battery deteriorates, or the like.

Further, a method of forming a gas pocket unit on an exterior material of a pouch-type secondary battery to collect the gas generated during the activation process, and then cutting the gas pocket unit and resealing the pouch exterior material according to a final product specification after releasing the gas by forming a hole in the gas pocket unit is also used, but this method is very inefficient in an aspect of production. Accordingly, a new method that allows a gas generated in the battery to be efficiently removed while the battery is manufactured without deterioration of overall performance of the battery is necessary.

### [Prior Art Document]

Korean Patent Publication No. 10-2019-0142965

### [Disclosure]

### [Technical Problem]

The present invention has been devised to solve the above problems, and is directed to providing a secondary battery capable of removing a gas generated during charging/discharging, specifically, activation of a battery.

### [Technical Solution]

To this end, in one embodiment, the present invention provides an electrode for a secondary battery including: an electrode current collector; and mixture layers and gas adsorption layers disposed on at least one surface of the electrode current collector, wherein the mixture layers have a pattern structure, and the gas adsorption layers are provided in regions where the mixture layers are not patterned.

In this case, the mixture layers and the gas adsorption layers may form one layer without irregularities on a surface thereof.

To this end, an average thickness of the mixture layers may be the same as or thicker than an average thickness of the gas adsorption layers.

Further, the average thickness of each of the mixture layers and the gas adsorption layers may be 0.01 to 5 mm.

In addition, an area of the gas adsorption layers may occupy 5 to 30% of an area of the mixture layers.

In addition, the gas adsorption layers may include one or more types of gas adsorbent selected from the group consisting of a porous carbon material, a porous metal oxide, and a porous gel.

Here, the porous carbon material may include one or more selected from the group consisting of a carbon fiber, a carbon molecular sieve, and activated carbon.

Further, the porous metal oxide may include one or more selected from the group consisting of nickel (Ni), platinum (Pt), palladium (Pd), calcium (Ca), strontium (Sr), barium (Ba), thallium (Ti), zirconium (Zr), hafnium (Hf), vanadium (V), niobium (Nb), tantalum (Ta), chromium (Cr), molybdenum (Mo), and tungsten (W).

In addition, in one embodiment, the present invention provides an electrode assembly including: a positive electrode; a negative electrode; and a separator disposed between the positive electrode and the negative electrode, wherein each of the positive electrode and the negative electrode includes mixture layers and gas adsorption layers disposed on at least one surface of a current collector, the mixture layers have a pattern structure on the current collector, the gas adsorption layers are provided in regions where the mixture layers are not patterned, and the gas adsorption layers of the positive electrode and the gas adsorption layers of the negative electrode are disposed to come into contact with each other with respect to the separator.

Here, the positive electrode and the negative electrode may each have a structure in which the mixture layers and the gas adsorption layers are disposed on both surfaces of each current collector or a structure in which the mixture layers are disposed on one surface of each current collector and the mixture layers and the gas adsorption layers are disposed on the other surface of each current collector.

Further, in one embodiment, the present invention provides a secondary battery including the above-described electrode assembly according to the present invention.

### [Advantageous Effects]

In an electrode for a secondary battery according to the present invention, since mixture layers are disposed on an electrode current collector in a pattern structure, and gas adsorption layers are disposed in regions where the mixture layers are not patterned, an effect that performance and stability of a secondary battery are improved is provided due to an excellent effect of removing a gas generated during initial charging/discharging of the secondary battery.

### [Brief Description of the Drawings]

FIG. 1 is a plan view illustrating an example of an electrode for a secondary battery including a gas adsorbent according to the present invention.
FIG. 2 is a cross-sectional view illustrating an example of the electrode for a secondary battery including the gas adsorbent according to the present invention.
FIGS. 3 to 5 are cross-sectional views illustrating an example of an electrode assembly for a secondary battery including the gas adsorbent according to the present invention.

### [Best mode]

Hereinafter, preferable embodiments of the present invention will be described in detail with reference to the accompanying drawings so that those skilled in the art may easily carry out the present invention. Other objects, features, and operation advantages including objects, operations, and effects of the present invention will become more apparent from description of the preferable embodiments.

For reference, the embodiments disclosed herein are only proposed by selecting the most preferable embodiments among various possible examples to help those skilled in the art understand the technology, and the technical spirit of the present invention is not necessarily limited or restricted only to the proposed embodiments, and various changes, additions, and modifications including equivalents or substitutes not departing from the technical spirit of the present invention are possible.

Further, terms or expressions used in the specification and the claims of the present application are defined based on the principle in that the inventor may appropriately define the concept of the terms to describe the invention thereof in the best way, and should not be interpreted as being limited only to the dictionary meaning, but should be interpreted with a meaning and concept consistent with the technical spirit of the present invention. For example, a singular form includes a plural form unless otherwise defined, and expressions related to directions are set based on positions expressed in the drawings for convenience of description.

### Electrode for secondary battery

In one embodiment, the present invention provides an electrode for a secondary battery including: an electrode current collector; and mixture layers and gas adsorption layers disposed on at least one surface of the electrode current collector, wherein the mixture layers have a pattern structure on the electrode current collector or have an unapplied region where a groove is disposed, and the gas adsorption layers are disposed in the unapplied region.

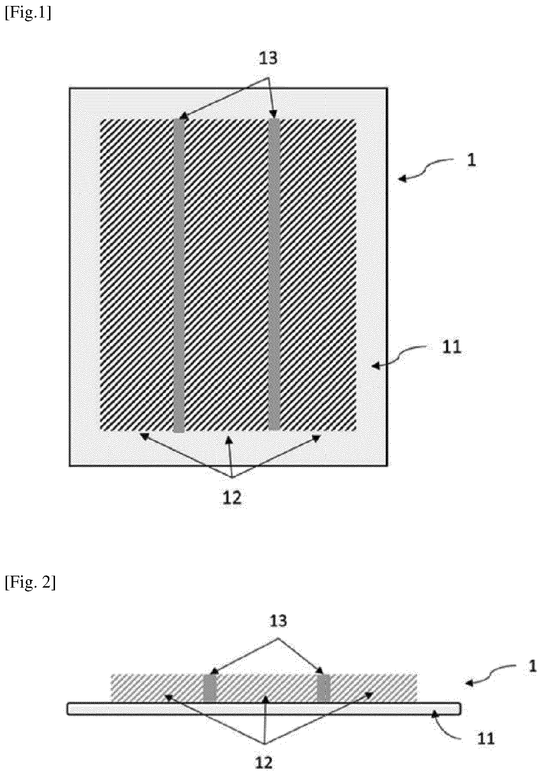

FIGS. 1 and 2 are a plan view and a cross-sectional view respectively illustrating an example of an electrode 1 for a secondary battery according to the present invention.

Referring to FIGS. 1 and 2, the electrode 1 for a secondary battery according to the present invention may include a current collector 11, mixture layers 12, and gas adsorption layers 13, and the electrode 1 may be a positive electrode or a negative electrode.

Here, the mixture layers 12 may be formed to have a pattern structure on the current collector 11 to suppress a side reaction between active ingredients of the mixture layers and a gas by forming the gas adsorption layers 13 between patterns of the mixture layers 12 to immediately remove the gas generated near the mixture layers during charging/discharging of a battery.

Further, a shape of the pattern structure of the mixture layers 12 is not specifically limited as long as the gas adsorption layers 13 may occupy a predetermined area in the mixture layers 12.

As one example, the mixture layers 12 may have a stripe-shaped pattern structure, and in this case, each of the gas adsorption layers 13 may have a width of 1 to 5 mm or 2 to 4 mm.

Further, the mixture layers 12 may form one layer without irregularities on a surface thereof together with the gas adsorption layers 13. That is, in the electrode 1 for a secondary battery according to the present invention, one combined layer is provided on the electrode current collector 11, and the layer has a structure in which the mixture layers 12 and the gas adsorption layers 13 are combined. In the present invention, energy density reduction of an electrode assembly and deterioration of workability during manufacturing due to the electrode irregularities may be prevented by controlling the structure of the mixture layers 12 and the gas adsorption layers 13 to form the one layer without irregularities.

Further, the mixture layers 12 may form one layer without irregularities on the surface thereof together with the gas adsorption layers 13, and an average thickness thereof may be the same as or thicker than an average thickness of the gas adsorption layers 13.

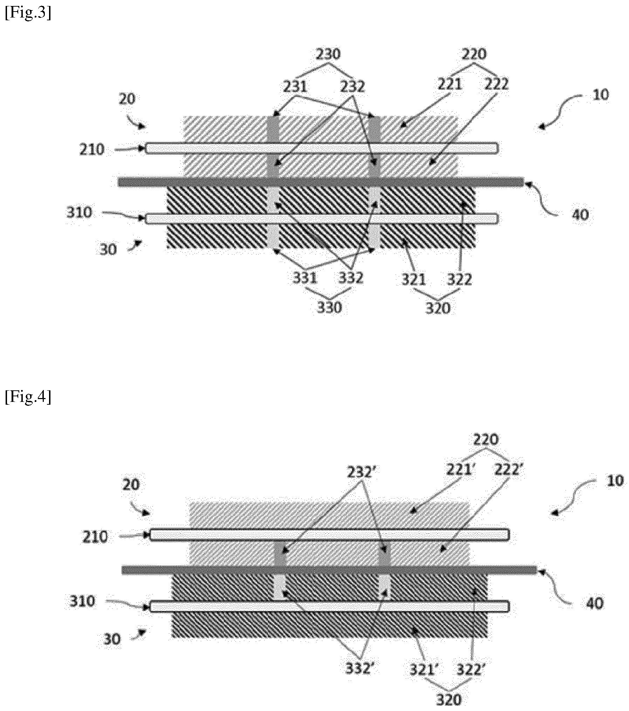

As one example, as shown in FIG. 3, since the layer combined with the mixture layers 12 and the gas adsorption layers 13 is present only in regions where the mixture layers 12 are patterned and is not present in a non-patterned region and thus the gas adsorption layers 13 have a structure of completely filling the non-patterned region, the average thickness of the mixture layers 12 and the average thickness of the gas adsorption layers 13 may be the same.

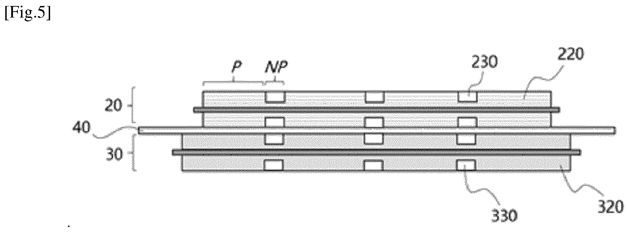

As another example, as shown in FIG. 5, the layer combined with the mixture layers 12 and the gas adsorption layers 13 may have a structure in which the mixture layers 12 have an embossed pattern structure P on the surface and the gas adsorption layers 13 are provided in an intaglio (or groove, NP) to have a pattern on the surface, and thus may have a configuration in which the average thickness of the mixture layers 12 is thicker than the average thickness of the gas adsorption layers 13.

Further, the average thickness of each of the mixture layers 12 and the gas adsorption layers 13 may be 0.01 to 5 mm, and specifically, may be 0.01 to 3 mm; 0.01 to 2 mm; 0.01 to 1 mm; 0.05 to 1 mm; or 0.01 to 0.5 mm.

Further, when observed from the surface of the electrode for a secondary battery, an area of the gas adsorption layers 13 may be 5 to 30%, specifically, 5 to 20%; 5 to 10%; 10 to 30%; 15 to 30%; or 20 to 30% of an area of the mixture layers 12.

As described above, the present invention may not only more effectively remove the gas generated during the charging/discharging of the secondary battery while maximizing electrical performance of the secondary battery by controlling the structures, the average thicknesses, and/or area ratio of the mixture layers and the gas adsorption layers, but also may prevent extraction of lithium metal (Li) due to non-uniformity of the charging/discharging.

Further, the gas adsorption layers 13 may include one or more types of gas adsorbent selected from the group consisting of a porous carbon material, a porous metal oxide, and a porous gel each having a gas adsorption property.

In this case, the porous carbon material may include one or more selected from the group consisting of a carbon fiber, a carbon molecular sieve, and activated carbon.

As one example, the porous carbon material may include activated carbon.

Further, the porous metal oxide may include one or more selected from the group consisting of silicon (Si), aluminum (Al), nickel (Ni), platinum (Pt), palladium (Pd), calcium (Ca), strontium (Sr), barium (Ba), thallium (Ti), zirconium (Zr), hafnium (Hf), vanadium (V), niobium (Nb), tantalum (Ta), chromium (Cr), molybdenum (Mo), and tungsten (W).

As one example, the porous metal oxide may include silica particles containing silicon (Si); alumina containing aluminum (Al); or zeolites containing silicon (Si) and aluminum (Al) individually or in combination, and in some cases, the porous metal oxide may include silica particles, alumina, and/or zeolites doped with nickel (Ni), vanadium (V), molybdenum (Mo), or the like.

Meanwhile, the current collector 11 generally has a thickness of 3 to 500 µm, and is not specifically limited as long as the material has high conductivity and does not cause a chemical change in the battery. For example, stainless steel, aluminum, nickel, titanium, baked carbon, or a material in which aluminum or stainless steel is surface-treated with carbon, nickel, titanium, silver, or the like may be used. The current collector may increase an adhesive force of an electrode active material by forming fine irregularities on the surface thereof, and various forms such as a film, a sheet, a foil, a net, a porous body, a foam body, a nonwoven body, and the like may be used.

The mixture layers 12 are manufactured by applying a mixture of an active material, a conductive material, and a binder and then drying the mixture, and a filler is further added to the mixture as necessary.

When the electrode 1 is a positive electrode, a layered compound such as a lithium cobalt oxide (LiCoO₂), a lithium nickel oxide (LiNiO₂), or the like, or a compound substituted with one or more transition metals; a lithium manganese oxide of a formula Li₁₊ₓMn₂₋ₓO₄ (here, x is 0 to 0.33), LiMnO₃, LiMn₂O₃, LiMnO₂, and the like; a lithium copper oxide (Li₂CuO₂); a vanadium oxide such as LiV₃O₈, LiV₃O₄, V₂O₅, Cu₂V₂O₇, or the like; a Ni sites-type lithium nickel oxide expressed by a formula LiNi₁₋ₓMₓO₂ (here, M is Co, Mn, Al, Cu, Fe, Mg, B, or Ga, and x is 0.01 to 0.3); a lithium manganese composite oxide expressed by a formula LiMn₂₋ₓMₓO₂ (here, M is Co, Ni, Fe, Cr, Zn, or Ta, and x is 0.01 to 0.1) or Li₂Mn₃MO₈ (here, M is Fe, Co, Ni, Cu, or Zn); LiMn₂O₄ in which some Li in a formula is substituted with an alkaline earth metal ion; disulfide compounds; Fe₂(MoO₄)₃; and the like may be used as positive electrode active materials, but the positive electrode active materials are not limited thereto.

When the electrode 1 is a negative electrode, for example, carbon such as hard carbon, graphitic carbon, or the like; a metal compound oxide such as LiₓFe₂O₃ (0 ≤ x ≤1), LiₓWO₂ (0 ≤ x ≤1), SnₓMe₁₋₋ₓMe'_{y}O_{z} (Me: Mn, Fe, Pb, Ge; Me': Al, B, P, Si, group 1, group 2, and group 3 elements of the periodic table, halogen; 0 < x ≤ 1; 1 ≤ y ≤ 3; 1 ≤ z ≤ 8) or the like; a lithium metal; a lithium alloy; a silicon-based alloy; a tin-based alloy; a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, or the like; a conductive polymer such as polyacetylene or the like; a Li-Co-Ni based material; and the like may be used as negative electrode active materials

In this case, the positive electrode active material and/or the negative electrode active material may be included in 80 to 98 wt% based on a total weight of the mixture layer.

Further, the conductive material is generally added in 1 to 10 wt% based on a total weight of a mixture including an active material, and is applied to both the positive electrode and the negative electrode. This conductive material is not specifically limited as long as the material has conductivity and does not cause a chemical change in the battery, and for example, graphite such as natural graphite, artificial graphite, or the like; carbon black such as carbon black, acetylene black, Ketjen black, channel black, furnace black, lamp black, summer black, or the like; a conductive fiber such as a carbon fiber, a metal fiber, or the like; or a metal powder such as a carbon fluoride powder, an aluminum powder, a nickel powder, or the like may be used as the conductive material.

In addition, the binder is a component that assists in the bonding between the active material and the conductive material and bonding to the current collector, and is generally added in 1 to 10 wt% based on the total weight of the mixture including the active material, and similarly, is applied to both the positive electrode and the negative electrode. Polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluoro rubber, various copolymers, or the like may be an example of the binder.

Further, the filler is optionally used as a component which suppresses expansion of the electrode, and is not specifically limited as long as it is a fibrous material without causing a chemical change in the battery, and for example, an olefin polymer such as polyethylene, polypropylene, or the like; or a fibrous material such as a glass fiber, a carbon fiber, or the like, is used as the filler. Likewise, the filler may also be applied to both the positive electrode and the negative electrode.

In addition, other components such as a viscosity modifier, an adhesion promoter, and the like may be further included selectively or in a combination of two or more, and detailed description thereof will be omitted.

### Electrode assembly for secondary battery

Further, in one embodiment, the present invention provides an electrode assembly including: a positive electrode; a negative electrode; and a separator disposed between the positive electrode and the negative electrode, wherein each of the positive electrode and the negative electrode includes the above-described electrode for a secondary battery according to the present invention, and gas adsorption layers each formed on the positive electrode and the negative electrode are disposed to come into contact with each other with respect to the separator.

Since the electrode assembly for a secondary battery according to the present invention may effectively remove a gas generated during charging/discharging, specifically activation of the secondary battery, by including the electrodes for a secondary battery described above as the positive electrode and the negative electrode, there is an advantage in that the secondary battery has excellent performance and stability.

FIG. 3 illustrates a cross-sectional view of an electrode assembly for a secondary battery including a gas adsorbent according to one embodiment of the present invention.

The electrode assembly 10 is formed of a positive electrode 20, a negative electrode 30, and a separator 40.

The positive electrode 20 is formed of a positive electrode current collector 210, positive electrode mixture layers 220, and positive electrode gas adsorption layers 230. Further, the negative electrode 30 is formed of a negative electrode current collector 310, negative electrode mixture layers 320, and negative electrode gas adsorption layers 330.

In the case of the positive electrode 20, the positive electrode mixture layers 220 and the positive electrode gas adsorption layers 230 may be coated on both surfaces of the positive electrode current collector 210, and in the case of the negative electrode 30, like the positive electrode 20, the negative electrode mixture layers 320 and the negative electrode gas adsorption layers 330 may be coated on both surfaces of the negative electrode current collector 310.

A pattern structure of the positive electrode mixture layers 220 and a pattern structure of the negative electrode mixture layers 320 adjacent to the separator 40 may be coated to completely overlap each other with respect to the separator 40, and the positive electrode gas adsorption layers 230 and the negative electrode gas adsorption layers 330 respectively disposed in regions where the mixture layers 220 and 320 are not patterned may also be coated to completely overlap each other with respect to the separator 40 because lithium may be extracted due to non-uniformity of charging/discharging when the positive electrode mixture layers 220 and the negative electrode mixture layers 320 are not coated at the same position with respect to the separator 40.

Further, since an outer positive electrode mixture layer 221 coated on one surface of the positive electrode current collector 210 and an inner positive electrode mixture layer 222 coated on the other surface of the positive electrode current collector 210 are also coated to overlap each other with respect to the positive electrode current collector 210, and an outer negative electrode mixture layer 321 coated on one surface of the negative electrode current collector 310 and an inner negative electrode mixture layer 322 coated on the other surface of the negative electrode current collector 310 are also coated to overlap each other with respect to the negative electrode current collector 310 to form both the outer positive electrode mixture layer 221 and the inner positive electrode mixture layer 222 and the outer negative electrode mixture layer 321 and the inner negative electrode mixture layer 322 to overlap each other, a manufacturing process may be simplified while preventing the occurrence of non-uniformity of the charging/discharging.

FIG. 4 illustrates a cross-sectional view of an electrode assembly for a secondary battery including a gas adsorbent according to another embodiment of the present invention.

As shown in FIG. 4, with respect to the positive electrode current collector 210, only an inner positive electrode mixture layer 222' adjacent to the separator 40 has a pattern structure, and a positive electrode gas adsorption layer 232' is disposed in a non-patterned region of the positive electrode mixture layer 222'. Further, with respect to the negative electrode current collector 310, only an inner negative electrode mixture layer 322' adjacent to the separator 40 may have a pattern structure, and a negative electrode gas adsorption layer 332' may be disposed in a non-patterned region of the negative electrode mixture layer 322'. Further, with respect to the separator 40, the pattern structure of the positive electrode mixture layer 222' and the pattern structure of the negative electrode mixture layer 322' may be disposed to overlap each other, and the positive electrode gas adsorption layer 232' and the negative electrode gas adsorption layer 332' may be disposed to overlap each other.

### Secondary battery

Further, the present invention provides a secondary battery including the above-described electrode assembly.

Since the secondary battery according to the present invention may effectively remove a gas generated during the charging/discharging, specifically the activation of the secondary battery, by including the above-described electrode assembly of the present invention, there is an advantage that the secondary battery has the excellent performance and stability.

Here, the secondary battery may be used as a power source for devices which demand high temperature stability, a long cycle characteristic, a high rate characteristic, and the like, and examples of the devices may include: power tools which move by receiving power from an electrical motor, a mobile device, and a wearable device; electric vehicles including an electric vehicle (EV), a hybrid electric vehicle (HEV), a plug-in hybrid electric vehicle (PHEV), and the like; electric two-wheeled vehicles including an electric bicycle (E-bike) and an electric scooter (Escooter); an electric golf cart; an energy storage system; and the like , but are not limited thereto.

### [Detailed Description of the Preferred Embodiments]

Hereinafter, the present invention will be described in more detail according to the embodiment.

However, the embodiments to be described below merely exemplify the present invention, and the content of the present invention is not limited thereto.

### Examples 1 and 2. Manufacturing of secondary battery

A gas adsorption slurry in which silica particles and zeolite particles (Ni-doped) were mixed in a ratio of 1:1 was manufactured.

Separately, a positive electrode slurry for a lithium secondary battery was manufactured by injecting N-methylpyrrolidone into a homo mixer, and uniformly mixing 97.8 parts by weight of LiNi_{0.6}Co_{0.2}Mn_{0.2}O₂ as a positive electrode active material; 0.7 parts by weight of carbon black as a conductive material; and 1.5 parts by weight of PVdF as a binder with respect to 100 parts by weight of a positive electrode slurry solid. A positive electrode in which mixtures layers and gas adsorption layers were formed as one layer without irregularities was manufactured by applying the manufactured positive electrode slurry to both surfaces of an aluminum thin plate in a stripe pattern structure, and applying the gas adsorption slurry to a non-patterned region and then drying and rolling the resultant.

Separately, a negative electrode slurry for a lithium secondary battery was manufactured by injecting water into a homo mixer, and uniformly mixing 97.5 parts by weight of artificial graphite as a negative electrode active material; 2 parts by weight of styrene butadiene rubber (SBR) as a binder; and 0.5 parts by weight of carboxymethyl cellulose (CMC) as a thickener with respect to 100 parts by weight of a negative electrode slurry solid. A negative electrode in which mixture layers and gas adsorption layers were formed as one layer without irregularities was manufactured by applying the manufactured negative electrode slurry to both surfaces of a copper thin plate in a stripe pattern structure like the positive electrode, and applying a gas adsorption slurry to a non-patterned region and then drying and rolling the resultant.

Here, the thicknesses and structures of the mixture layers and the gas adsorption layers of the manufactured positive electrode and negative electrode are as shown in Table 1 below.

An electrode assembly was manufactured by interposing a porous polyethylene (PE) film (average thickness: 20 µm, length: 30 cm) as the separator between the manufactured positive electrode and negative electrode, and a lithium secondary battery was manufactured by inserting the manufactured electrode assembly into a cell pouch, and injecting an electrolyte.

**[Table 1]**

| | Average thickness of mixture layers | Gas adsorption layers | | Area of gas adsorption layers | Cross-sectional structure |
|---|---|---|---|---|---|
| | | Average thickness | Width | | |
| Example 1 | 0.5 mm | 0.5 mm | 3 mm | 10% of mixture layers | Structure of FIG. 3 |
| Example 2 | 0.5 mm | 0.3 mm | 3 mm | 10% of mixture layers | Structure of FIG. 5 |

### Comparative Example 1. Manufacturing of secondary battery

A gas adsorption slurry in which silica particles and zeolite particles (Ni-doped) were mixed in a ratio of 1:1 was manufactured.

Separately, a positive electrode slurry for a lithium secondary battery was manufactured by injecting N-methylpyrrolidone into a homo mixer, and uniformly mixing 97.8 parts by weight of LiNi_{0.6}Co_{0.2}Mn_{0.2}O₂ as a positive electrode active material; 0.7 parts by weight of carbon black as a conductive material; and 1.5 parts by weight of PVdF as a binder with respect to 100 parts by weight of a positive electrode slurry solid. Mixture layers were formed by applying the manufactured positive electrode slurry to both surfaces of an aluminum thin plate, and then drying and rolling the resultant. Thereafter, a positive electrode in which gas adsorption layers were formed on the mixture layers was manufactured by continuously applying a gas adsorption slurry on the mixture layers and then drying and rolling the resultant.

Separately, a negative electrode slurry for a lithium secondary battery was manufactured by injecting water into a homo mixer, and uniformly mixing 97.5 parts by weight of artificial graphite as a negative electrode active material; 2 parts by weight of styrene butadiene rubber (SBR) as a binder; and 0.5 parts by weight of carboxymethyl cellulose (CMC) as a thickener with respect to 100 parts by weight of a negative electrode slurry solid. Mixture layers were formed by applying the manufactured negative electrode slurry to both surfaces of a copper thin plate, and then drying and rolling the resultant. Thereafter, a negative electrode in which gas adsorption layers were formed on the mixture layers was manufactured by continuously applying a gas adsorption slurry on the mixture layers and then drying and rolling the resultant.

In this case, average thicknesses of the positive electrode mixture layers, the negative electrode mixture layers, and the gas adsorption layers formed on each mixture layer were respectively 0.5 mm, 0.5 mm, and 0.05 mm.

An electrode assembly was manufactured by interposing a porous polyethylene (PE) film (average thickness: 20 µm, length: 30 cm) as a separator between the manufactured positive electrode and negative electrode, and a lithium secondary battery was manufactured by inserting the manufactured electrode assembly into a cell pouch, and injecting an electrolyte. The electrolyte was manufactured by dissolving lithium hexafluorophosphate (LiPF₆) having a concentration of 1.0 M in an organic solvent formed of ethylene carbonate/dimethyl carbonate/ethylmethyl carbonate (mixture volume ratio of EC/DMC/EMC: 3/4/3).

### Experimental Example

In order to evaluate an effect of the electrode for a secondary battery according to the present invention, activation for each of the secondary batteries manufactured in Examples and Comparative Example was performed so that a secondary battery capacity (SOC) was 60% under a condition of a constant current of 0.2 C at 60 °C and the gas generated during the activation was deaerated. Thereafter, the electrolyte was extracted by 0.1 cc from the inside of the battery, and the content of gas dissolved in the electrolyte was analyzed through gas chromatography.

Thereafter, the charging/discharging of the secondary battery that was deaerated after the activation was repeatedly performed 50 times under conditions of 4.2 V and 0.33 C at 45 °C, and the content of gas dissolved in the electrolyte was analyzed during each charging/discharging by extracting the electrolyte in the above-described method. A result thereof is shown in Table 2 below.

**[Table 2]**

| Unit: ppm | Gas concentration in electrolyte during activation | Gas concentration in electrolyte after activation |
|---|---|---|
| Example 1 | 190 | 320 |
| Example 2 | 210 | 340 |
| Comparative Example 1 | 280 | 470 |

As shown in Table 2, it was seen that, a collected amount of the gas generated during the charging/discharging in the battery is significantly small as the secondary battery according to the present invention includes the gas adsorption layers provided in the non-patterned regions of the mixture layers in addition to the mixture layers having a pattern structure on the current collector.

Although preferable embodiments of the present invention have been described above, those skilled in the art may variously modify and change the present invention within a range not departing from the spirit and area of the present invention disclosed in the claims which will be described below.

Accordingly, the technical scope of the present invention is not limited to the content disclosed in the detailed description of the specification, and should be defined by the claims.

**[Reference numerals]**

| | | | |
|---|---|---|---|
| 1: | electrode | | |
| 10: | electrode assembly | | |
| 11: | current collector | | |
| 12: | mixture layer | | |
| 13: | gas adsorption layer | | |
| 20: | positive electrode | 30: | negative electrode |
| 40: | separator | | |
| 210: | positive electrode current collector | | |
| 310: | negative electrode current collector | | |
| 220, 221, 222, 221', 222': | positive electrode mixture layer | | |
| 230, 231, 232, 232': | positive electrode gas adsorption layer | | |
| 320, 321, 322, 321', 322': | negative electrode mixture layer | | |
| 330, 331, 332, 332': | | negative electrode gas adsorption layer | |

## Claims

1. An electrode for a secondary battery comprising:
an electrode current collector; and
mixture layers and gas adsorption layers disposed on at least one surface of the electrode current collector,
wherein the mixture layers have a pattern structure, and
the gas adsorption layers are provided in regions where the mixture layers are not patterned.

2. The electrode of claim 1, wherein the mixture layers and the gas adsorption layers form one layer without irregularities on a surface thereof.

3. The electrode of claim 1, wherein an average thickness of the mixture layers is the same as or thicker than an average thickness of the gas adsorption layers.

4. The electrode of claim 1, wherein an average thickness of each of the mixture layers and the gas adsorption layers is 0.01 to 5 mm.

5. The electrode of claim 1, wherein an area of the gas adsorption layers is 5 to 30% of an area of the mixture layers.

6. The electrode of claim 1, wherein the gas adsorption layers include one or more types of gas adsorbent selected from the group consisting of a porous carbon material, a porous metal oxide, and a porous gel.

7. The electrode of claim 6, wherein the porous carbon material includes one or more selected from the group consisting of a carbon fiber, a carbon molecular sieve, and activated carbon.

8. The electrode of claim 6, wherein the porous metal oxide includes one or more selected from the group consisting of nickel (Ni), platinum (Pt), palladium (Pd), calcium (Ca), strontium (Sr), barium (Ba), thallium (Ti), zirconium (Zr), hafnium (Hf), vanadium (V), niobium (Nb), tantalum (Ta), chromium (Cr), molybdenum (Mo), and tungsten (W).

9. An electrode assembly comprising:
a positive electrode;
a negative electrode; and
a separator disposed between the positive electrode and the negative electrode,
wherein each of the positive electrode and the negative electrode includes mixture layers and gas adsorption layers formed on at least one surface of a current collector,
the mixture layers have a pattern structure,
the gas adsorption layers are provided in regions where the mixture layers are not patterned, and
the gas adsorption layers of the positive electrode and the gas adsorption layers of the negative electrode are disposed to come into contact with each other with respect to the separator.

10. A secondary battery comprising the electrode assembly according to claim 9.
